# EUROPÄISCHE PATENTSCHRIFT

(11) **EP 1 857 207 B1**
(45) Veröffentlichungstag und Bekanntmachung des Hinweises auf die Patenterteilung: **21.05.2014**
(21) Anmeldenummer: 07000086.4
(22) Anmeldetag: 04.01.2007
(51) Int. Cl.: B23D 45/02

(54) **Transportable Kappsäge**
Transportable chop saw
Scie à onglet transportable

(30) Priorität: 16.05.2006 DE 202006007830 U
(43) Veröffentlichungstag der Anmeldung: 21.11.2007
(73) Patentinhaber: Metabowerke GmbH, 72622 Nürtingen (DE)
(72) Erfinder: Bergmann, Laurenz, 49733 Haren/Ems (DE)
(74) Vertreter: Lorenz, Markus

(56) Entgegenhaltungen:
- CH-A- 386 208
- DE-A1- 1 752 235
- DE-U1- 29 612 705
- FR-A- 1 147 266
- FR-A- 2 621 520
- US-A- 3 291 166

## Beschreibung

Die Erfindung betrifft eine transportable Kappsäge mit den Merkmalen des Oberbegriffs von Anspruch 1.

Eine solche Vorrichtung ist aus US 3 291 166 A1 bekannt.

Mit einer Kappsäge werden Werkstücke, insbesondere Leisten oder Platten, aus Holz oder Kunststoff mittels des Kreissägeblattes des Sägeaggregates auf die gewünschte Länge abgeschnitten. Mit einer Kapp- und Gehrungssäge kann man nicht nur gerade Schnitte, sondern auch Schnitte in einem spitzen Winkel zur entsprechenden Symmetrieachse des Werkstückes ausführen. Eine moderne Kappsäge hat meist eine doppelte Möglichkeit zur Ausführung von Gehrungsschnitten, indem zusätzlich zu einem feststehenden Träger oder Tragtisch ein daran drehbar gelagerter Drehtisch vorgesehen ist. An diesem Drehtisch ist dann seinerseits das Sägeaggregat wiederum um eine horizontale Schwenkachse mittels einer Neigungs-Schwenklagerung angebracht (siehe beispielsweise DE 298 09 198 U1).

Grundsätzlich sind solche Kappsägen auch für die Metallbearbeitung, beispielsweise zum Ablängen von Aluminiumprofilen bekannt. Grundsätzlich kann man auch eine Kappsäge für die Holzbearbeitung bei Verwendung eines passenden Kreissägeblattes für die Bearbeitung von Werkstücken aus Metall verwenden.

Die hier angesprochene Kappsäge ist eine transportable Kappsäge, also eine solche, die ein Handwerker oder ein Heimwerker noch von einem Ort zum anderen tragen und beispielsweise im Kofferraum seines Kraftfahrzeugs transportieren kann. Solche Kappsägen sind im Betrieb ortsfest und befinden sich dabei entweder auf einem Arbeitstisch oder einer Werkbank oder stehen auf einem eigenen, meist ausklappbaren Traggestell.

Die Funktion einer Kappsäge kann man auch mit handgehaltenen Geräten ausführen. Solche Handgeräte gehören nicht zur Gattung transportabler Holzbearbeitungsmaschinen.

Neben transportablen Kappsägen sind auch stationäre Kappsägen für das Ablängen großer Platten bekannt, sog. Plattenaufteilsägen. Eine Plattenaufteilsäge dient dem Schneiden von großflächigen Holzfaserplatten mit mehreren Metern Länge und meist auch mehreren Metern Breite. Eine Plattenaufteilsäge hat eine gegenüber der Senkrechten leicht geneigt ausgerichtete Plattenanlagefläche, an deren unterem Rand eine Rollenbahn angeordnet ist, auf der die im wesentlichen senkrecht stehende und an der Fläche angelehnte Platte verschoben werden kann. An der leicht geneigt stehenden Fläche befindet sich eine Führung eines Sägeaggregates mit Kreissägeblatt, an der das Sägeaggregat läuft, wenn das Kreissägeblatt von oben nach unten durch die Platte hindurchgezogen wird. Plattenaufteilsägen sind seit fast 100 Jahren bekannt und haben das Gebiet der transportablen Kappsägen, das seit noch längerer Zeit ingenieurmäßig entwickelt wird, nicht beeinflußt.

Für die Herstellung von rechteckigen Rahmen für Fenster und Türen sind stationäre Kappsägen bekannt, bei denen sich über einem stationären Sägetisch eine Portalkonstruktion befindet, an der ein von oben nach unten senkrecht zur Werkstückauflagefläche verschiebbares Sägeaggregat mit einem Kreissägeblatt angeordnet ist (EP 0 747 157 A1). Auch diese Konstruktionen stationärer Kappsägen für den Produktionsprozeß haben das Gebiet transportabler Kappsägen, um das es bei der vorliegenden Erfindung geht, nicht beeinflußt.

Bei einer normalen transportablen Kappsäge bestimmt sich die Länge des Sägeschnittes nach dem Durchmesser des Kreissägeblattes. Sie ist etwas geringer als der Durchmesser des Kreissägeblattes, da dieses ja nur zu weniger als der Hälfte seines Durchmessers in das Werkstück eintauchen kann. Um die Länge des Sägeschnittes zu erhöhen, gibt es bereits seit längerem transportable Kappsägen, bei denen das Sägeaggregat selbst nochmals auf einer Zugstangenführung gelagert ist. Die Zugstangen erstrecken sich bei abgesenkter Stellung des Sägeaggregates im wesentlichen horizontal über die Werkstückauflagefläche. Damit hat die Kappsäge insoweit zusätzlich die Funktion einer Radialarmsäge oder Zugsäge. Die Länge des Sägeschnittes ergibt sich aus Zuglänge und Sägeblattdurchmesser.

Für die Transportfähigkeit einer transportablen Kappsäge der in Rede stehenden Art sind deren Grundfläche und deren Gewicht von besonderer Bedeutung. Je länger der mögliche Sägeschnitt ist, beispielsweise durch Einsatz von Zugstangen, desto größer wird die benötigte Grundfläche der Kappsäge und desto größer wird deren Gewicht. Viele Entwicklungen sind daher darauf gerichtet, durch besonders intelligente Gestaltungen des Drehtisches mit darin befindlichem Sägeschlitz dafür zu sorgen, daß trotz einer großen Länge des Sägeschnittes Grundfläche und Gewicht der Kappsäge in erträglichen Grenzen bleiben.

Bekannt ist bereits eine transportable Kappsäge, die bereits von der Grundkonstruktion her günstigere Voraussetzungen für Grundfläche und Gewicht der Kappsäge bietet (US-A-3,291,166). Diese Kappsäge nutzt das aus dem Gebiet der Plattenaufteilsägen bekannte Prinzip der Bewegung des Sägeaggregates in einer Richtung senkrecht zur Werkstückauflagefläche. Die größere Abmessung des Werkstücks, die noch vollständig geschnitten werden kann, ist die Höhenabmessung, die geringere Abmessung ist die Tiefenabmessung. Das Sägeaggregat mit dem Kreissägeblatt wird zur Ausführung des Sägeschnittes nicht geschwenkt, sondern von oben nach unten vertikal in Richtung der Werkstückauflagefläche verschoben.

Bei der bekannten, zuvor erläuterten transportablen Kappsäge mit einem Sägeaggregat, das an einer im wesentlichen senkrecht zur Werkstückauflagefläche verlaufenden Führung verschiebbar angebracht ist, ist diese Führung in einem vertikal ausgerichteten, im wesentlichen C-förmigen Rahmen angeordnet, der um eine vertikale Schwenkachse schwenkbar ist und außerdem in einem weiteren, U-formigen Rahmen um eine horizontale Neigungs-Schwenkachse schwenkbar ist. Es handelt sich also um eine Art kardanische Aufhängung der Führung des Sägeaggregates. Das ist eine insgesamt komplexe und schwierige Konstruktion, die in der Praxis auf erhebliche Schwierigkeiten stößt.

Der Lehre liegt daher das Problem zugrunde, die bekannte transportable Kappsäge mit einem im wesentlichen senkrecht verfahrbaren Sägeaggregat so auszugestalten und weiterzubilden, daß mit einer einfacheren Konstruktion gleichwohl günstige Voraussetzungen für Grundfläche und Gewicht der Kappsäge gegeben sind.

Das zuvor aufgezeigte Problem wird bei einer transportablen Kappsäge mit den Merkmalen des Oberbegriffs von Anspruch 1 gelöst durch die Merkmale des kennzeichnenden Teils von Anspruch 1.

Erfindungsgemäß ist die Grundplatte zweiteilig aufgebaut mit einem feststehenden Träger oder Tragisch und einem daran um eine vertikale Drehachse drehbar angebrachten Drehtisch. Die Führung ist am Drehtisch angebracht, während der Anschlag am feststehenden Träger oder Tragtisch angebracht ist.

Mit der erfindungsgemäßen Konstruktion kann auch die erfindungsgemäße Kappsäge die Funktionen einer Gehrungssäge erfüllen, und zwar mit einer Grundfläche, die nicht größer ist als bei einer transportablen Kappsäge klassischer Bauart ohne Zugfunktion.

Bevorzugte Ausgestaltungen und Weiterbildungen der erfindungsgemäßen transportablen Kappsäge sind Gegenstand der Unteransprüche.

Im folgenden wird die Erfindung anhand einer lediglich ein bevorzugtes Ausführungsbeispiel darstellenden Zeichnung näher erläutert. In der Zeichnung zeigt
- Fig. 1: eine Seitenansicht, stark vereinfacht, einer erfindungsgemäßen transportablen Kappsäge und
- Fig. 2: ebenfalls sehr schematisch, eine Ansicht der Kappsäge aus Fig. 1 von vorn.

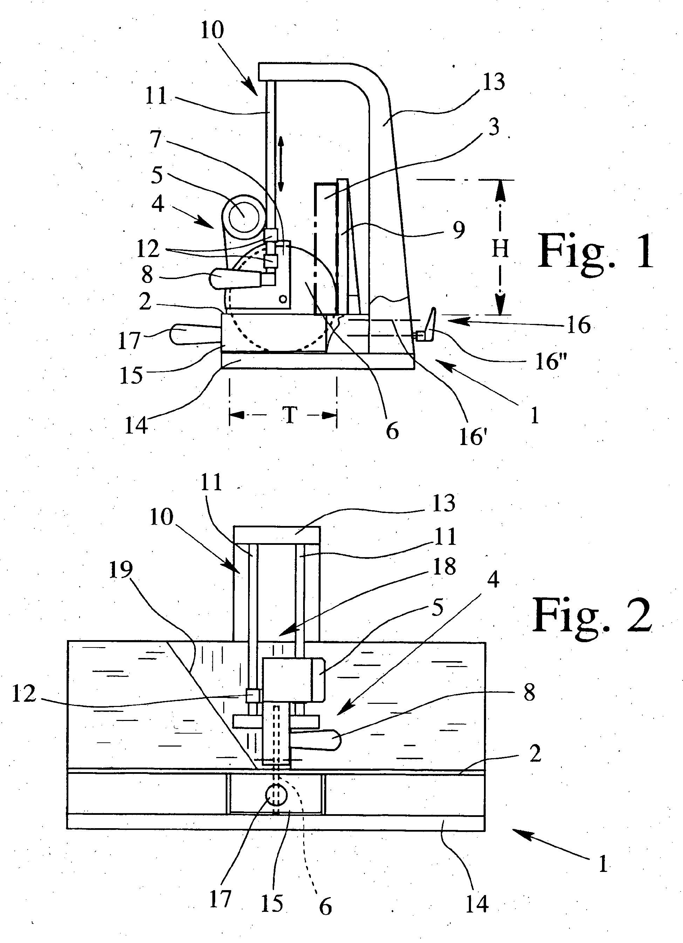

Für die nachfolgende Beschreibung ist ebenfalls all das zu berücksichtigen, was in der Beschreibungseinleitung zu der Typisierung einer transportablen Kappsäge ausgeführt worden ist. Die Zeichnungen zeigen ein bevorzugtes Ausführungsbeispiel einer transportablen Kappsäge, die hier insbesondere für die Holzbearbeitung bestimmt und geeignet ist. Fig. 1 und 2 sind stets im Zusammenhang zu sehen.

Die in der Zeichnung dargestellte transportable Kappsäge weist zunächst eine Grundplatte 1 auf, die eine Werkstückauflagefläche 2 bildet. In Fig. 1 und 2 ist auf der Werkstückauflagefläche 2 in gestrichelten Linien ein Werkstück 3, nach den hier dargestellten Abmessungen beispielsweise ein Verschalungsbrett, angedeutet. An der Grundplatte 1 ist ein Sägeaggregat 4 mit einem elektrischen Antriebsmotor 5 und einem Kreissägeblatt 6 gelagert, das von oben nach unten auf die Werkstückauflagefläche 2 zu und umgekehrt von der Werkstückauflagefläche 2 weg bewegbar ist. Fig. 1 und 2 zeigen das Sägeaggregat 4 mit dem Kreissägeblatt 6 in seiner tiefsten, untersten Position. Das Kreissägeblatt 4 weist einen üblichen Sägeblattschutz 7 (feststehende Schutzhaube und Pendelschutzhaube) auf. Ferner sehen wir einen Handgriff 8 zur Betätigung des Sägeaggregates 4. Dies kann der üblichen Technik bei klassischen transportablen Kappsägen entsprechen.

Vorgesehen ist ein an der Grundplatte 1 in einer bestimmten Relativlage zum Sägeaggregat 4 angeordneter Anschlag 9, an dem beim Sägen ein auf der Werkstückauflagefläche 2 angeordnetes Werkstück 3 anliegt. Ein solcher Anschlag 9 ist normalerweise eine Schiene aus Aluminium.

Einen vollständigen Sägeschnitt vorausgesetzt kann die Abmessung des Werkstückes 3 in Richtung senkrecht zur Werkstückauflagefläche 2 einen ersten Maximalwert H und in Richtung parallel zur Werkstückauflagefläche 2 einen zweiten Maximalwert T nicht überschreiten. Man erkennt das in Fig. 1 besonders gut, dort sind H und T eingezeichnet. Anders als bei einer klassischen transportablen Kappsäge ist also die größte Abmessung nicht die Tiefe, sondern die Höhe des Werkstücks 3, das auf der Werkstückauflagefläche 2 für den Sägeschnitt angeordnet ist.

Wesentlich ist nun, daß das Sägeaggregat 4 an einer im wesentlichen senkrecht zur Werkstückauflagefläche 2 verlaufenden Führung 10 verschiebbar angebracht ist und daß der erste Maximalwert H für das Werkstück 3 größer ist als der zweite Minimalwert T für das Werkstück 3. Anstelle der klassischen Schwenklagerung ist das Sägeaggregat 4 mittels einer vertikal ausgerichteten Verschiebeführung gelagert. Es behält also beim Verschieben von oben nach unten zur Ausführung des Sägeschnittes seine Relativlage zum Werkstück 3 genau bei, die Kräfteverhältnisse bleiben während des gesamten Sägeschnittes unverändert.

Die Führung 10 kann unter Berücksichtigung ihrer Grundfunktion natürlich auf ganz unterschiedliche Art und Weise ausgestaltet sein. Hier gibt es eine Vielzahl von Beispielen aus dem Bereich der Zugsägen.

Das dargestellte und insoweit bevorzugte Ausführungsbeispiel zeigt, daß die Führung 10 mindestens eine, vorzugsweise zwei, im wesentlichen senkrecht zur Werkstückauflagefläche 2 verlaufende Führungsstangen 11 aufweist, auf denen das Sägeaggregat 4 mit entsprechenden Führungshülsen 12 o.dgl, läuft. Zwei symmetrisch zum Kreissägeblatt 6 angeordnete Führungsstangen 11 nehmen das Kreissägeblatt 6 optimal zwischen sich auf und leiten die auftretenden Reaktionskräfte gleichmäßig und präzise in die Tragkonstruktion ab.

Aus Sicherheitsgründen empfiehlt es sich, daß das Sägeaggregat 4 in Richtung seiner oberen Endstellung vorgespannt, insbesondere federbelastet ist. Anstelle einer Federbelastung kann in diesem Fall auch eine Gewichtsbelastung, also gewissermaßen ein Gegengewicht, vorgesehen sein. Man kann beides auch kombinieren.

Das dargestellte Ausführungsbeispiel zeigt eine für die erfindungsgemäße transportable Kappsäge besonders geeignete Konstruktion dergestalt, daß die Führung 10 an einem Kragarm 13 angebracht ist, der an der Grundplatte 1 auf der von der Seite des Werkstücks 3 abgewandten Seite des Anschlags 9 angebracht und von dort aus bogenförmig nach vom in den Bereich vor dem Anschlag 9 geführt ist. Der Begriff "vor dem Anschlag 9" beschreibt hier und im folgenden den Bereich, in dem sich das Werkstück 3 auf der Werkstückauflagefläche 2 befindet. Dementsprechend klar definiert ist dann auch der Bereich "hinter dem Anschlag 9".

Das dargestellte Ausführungsbeispiel zeigt, daß hier die Grundplatte 1 zweiteilig aufgebaut ist, nämlich einen feststehenden Träger oder Tragtisch 14 und einen daran um eine vertikale Drehachse 15' drehbar angebrachten Drehtisch 15 aufweist, wobei die Werkstückauflagefläche 2 vom Drehtisch 15, ggf. mit angrenzenden Abschnitten des Tragtisches 14, gebildet ist. Insbesondere ist dabei vorgesehen, daß die Führung 10, insbesondere der Kragarm 13 mit der Führung 10, am Drehtisch 15 angebracht ist. Da sich das Werkstück 3 am Anschlag 9 ortsfest befinden soll ist vorgesehen, daß der Anschlag 9 am feststehenden Träger oder Tragtisch 14 angebracht ist.

Für die zweite Gehrungssägefunktion ist im dargestellten und bevorzugten Ausführungsbeispiel vorgesehen, daß der Kragarm 13 mit der Führung 10 an der Grundplatte 1, insbesondere am Drehtisch 15, mittels einer Neigungs-Schwenklagerung 16 angebracht ist. Vorzugsweise ist der Kragarm 13 mittels der Neigungs-Schwenklagerung 16 aus der Senkrechten nur zu einer Seite hin, vorzugsweise bis 45°, neigbar. Die Neigungs-Schwenklagerung 16 hat die eigentliche horizontale Schwenklagerung 16' so nahe wie möglich an der Werkstückauflagefläche 2 und hat darunter eine kreisbogenförmige Neigungsführung mit einem typischen Feststellknebel 16", alles in Fig. 1 dargestellt. Für den Drehtisch 15 erkennt man im übrigen in Fig. 1 links noch einen Betätigungsknauf 17. Nicht dargestellt ist, daß die Drehstellung des Drehtisches 15 auch an einer Winkelskala ablesbar und in bestimmten Winkelstellungen fixierbar ist.

Um den Sägeschnitt im Werkstück 3 sauber durchgehend ausführen zu können, ist es erforderlich, daß der Anschlag 9 in Fluchtlinie des Kreissägeblattes 6 einen vorzugsweise durchgehenden Sägeschlitz 18 aufweist. Ist für den Kragarm 13 mit der Führung 10 und dem Sägeaggregat 4 keine Neigung vorgesehen, so kann der Sägeschlitz 18 einfach gerade verlaufen. Ist jedoch eine Neigung vorgesehen, insbesondere mittels der Neigungs-Schwenklagerung 16, so muß man bei geneigt angeordnetem Kragarm 13 mit Führung 10 und Sägeaggregat 4 entweder den Anschlag 9 von der Grundplatte 1 abnehmen und ohne Anschlag sägen, oder eine besondere Ausgestaltung des Anschlags 9 vorsehen.

Im hier dargestellten Ausführungsbeispiel ist demgemäß vorgesehen, daß der Sägeschlitz 18 zur Neigungsseite hin durch eine nach oben und außen verlaufende, vorzugsweise im Winkel von 45° verlaufende Schräge 19 begrenzt ist. Zwar ist dadurch die Anschlagführung kurzer Werkstücke 3 am Anschlag 9 in diesem Bereich jedenfalls am oberen Rand nicht so gut. Das kann aber im Hinblick auf die wesentliche Handhabungserleichterung für entsprechende Gehrungsschnitte hingenommen werden.

Das dargestellte und insoweit bevorzugte Ausführungsbeispiel macht sich die Tatsache zunutze, daß bei entsprechender Anordnung des Anschlags 9 relativ zum Kreissägeblatt 6 der Sägeschlitz 18 im Anschlag 9 nicht durchzugehen braucht. Das dargestellte Ausführungsbeispiel zeigt insoweit den Sägeschlitz 18 rückseitig geschlossen, also gewissermaßen als winkelförmige Nut in der Frontfläche des Anschlags 9, rechts begrenzt durch einen parallel zum Kreissägeblatt 6 verlaufenden Rand, links begrenzt durch die Schräge 19.

Eine Alternative besteht auch darin, in diesem Abschnitt den Anschlag 9 mit einem herausnehmbaren Winkelstück zu versehen, so daß der Anschlag 9 für gerade Sägeschnitte nur den schmalen Sägeschlitz 18 aufweist, für geneigte Sägeschnitte aber den weit geöffneten, durch die Schräge 19 begrenzten Sägeschlitz 18 nutzt.

Es empfiehlt sich natürlich, die Abmessungen des Anschlags 9 auf die maximale Länge eines Sägeschnittes im Werkstück 3 abzustimmen. Dementsprechend empfiehlt es sich, daß die Höhe des Anschlags 9 etwa gleich dem ersten Maximalwert H ist.

Betrachtet man Fig. 1, so erkennt man, daß die Grundfläche der Kappsäge trotz Realisierung einer Zugfunktion nicht wesentlich größer ist als die Grundfläche einer traditionellen transportablen Kappsäge ohne Zugfunktion. Konkret gilt, daß nach bevorzugter Lehre der Erfindung die Tiefe der Grundfläche der Kappsäge das 1,5-fache bis 3,0-fache des Durchmessers des Sägeblattes 6 beträgt.

Hierbei wird der Betätigungsknauf 17 in der Bemessung der Tiefe ebenso wenig mitgerechnet wie der Feststellknebel 16". Man erkennt, daß Grundplatte 1 und Kragarm 13 an der Neigungs-Schwenklagerung 16 gemeinsam zu einer Tiefe von etwa dem Zweifachen des Durchmessers des Sägeblattes 6 führen.

## Patentansprüche

1. Transportable Kappsäge, insbesondere für die Holz- und Kunststoffbearbeitung,
mit einer Grundplatte (1), die eine Werkstückauflagefläche (2) bildet,
mit einem an der Grundplatte (1) gelagerten, von oben nach unten auf die Werkstückauflagefläche (2) zu und umgekehrt von der Werkstückauflagefläche (2) weg bewegbaren Sägeaggregat (4) mit einem Kreissägeblatt (6) und
mit einem an der Grundplatte (1) in einer bestimmten Relativlage zum Sägeaggregat (4) angeordneten Anschlag (9), an dem beim Sägen ein auf der Werkstückauflagefläche (2) angeordnetes Werkstück (3) anliegt,
wobei das Sägeaggregat (4) an einer im wesentlichen senkrecht zur Werkstückauflagefläche (2) verlaufenden Führung (10) verschiebbar angebracht ist, wobei, einen vollständigen Sägeschnitt vorausgesetzt, die Abmessung des Werkstückes (3) in Richtung senkrecht zur Werkstückauflagefläche (2) einen ersten Maximalwert (H) nicht überschreiten kann und in Richtung parallel zur Werkstückauflagefläche (2) einen zweiten Maximalwert (T) nicht überschreiten kann, und wobei der erste Maximalwert (H) für das Werkstück (3) größer ist als der zweite Maximalwert (T) für das Werkstück (3)
**dadurch gekennzeichnet,**
**daß** die Grundplatte (1) zweiteilig aufgebaut ist, nämlich einen feststehenden Träger oder Tragtisch (14) und einen daran um eine vertikale Drehachse (15') drehbar angebrachten Drehtisch (15) aufweist, wobei die Werkstückauflagefläche (2) vom Drehtisch (15), ggf. mit angrenzenden Abschnitten des Tragtisches (14) gebildet ist, und
**daß** die Führung (10) am Drehtisch (15) und der Anschlag (9) am feststehenden Träger oder Tragtisch (14) angebracht ist.

2. Kappsäge nach Anspruch 1, **dadurch gekennzeichnet,**
**daß** die Führung (10) an einem Kragarm (13) angebracht ist, der an der Grundplatte (1) auf der von der Seite des Werkstücks (3) abgewandten Seite des Anschlags (9) angebracht und von dort aus bogenförmig nach vorn in den Bereich vor dem Anschlag (9) geführt ist.

3. Kappsäge nach Anspruch 2, **dadurch gekennzeichnet,**
**daß** der Kragarm (13) mit der Führung (10) am Drehtisch (15) mittels einer Neigungs-Schwenklagerung (16) angebracht ist und daß, vorzugsweise, der Kragarm (13) mittels der Neigungs-Schwenk-lagerung (16) aus der Senkrechten nur zu einer Seite hin, vorzugsweise bis 45°, neigbar ist.

4. Kappsäge nach einem der Ansprüche 1 bis 3, **dadurch gekennzeichnet,**
**daß** der Anschlag (9) in Fluchtlinie des Kreissägeblattes (6) einen vorzugsweise durchgehenden Sägeschlitz (18) aufweist.

5. Kappsäge nach den Ansprüchen 3 und 4, **dadurch gekennzeichnet,**
**daß** der Sägeschlitz (18) zur Neigungsseite hin durch eine nach oben und außen verlaufende, vorzugsweise im Winkel von 45° verlaufende Schräge (1.9) am Anschlag (9) begrenzt ist.

6. Kappsäge nach einem der Ansprüche 1 bis 5, **dadurch gekennzeichnet,**
**daß** die Höhe des Anschlags (9) etwa gleich dem ersten Maximalwert (H) ist.

7. Kappsäge nach einem der Ansprüche 1 bis 6, **dadurch gekennzeichnet, daß** der Anschlag (9) von der Grundplatte (1) abnehmbar ist.

8. Kappsäge nach einem der Ansprüche 1 bis 7, **dadurch gekennzeichnet,**
**daß** die Tiefe der Grundfläche der Kappsäge das 1,5-flache bis 3,0-face des Durchmessers des Kreissägeblattes (6) beträgt.

9. Kappsäge nach einem der Ansprüche 1 bis 8, **dadurch gekennzeichnet,**
**daß** die Führung (10) mindestens eine, vorzugsweise zwei, im wesentlichen senkrecht zur Werkstückauflagefläche (2) verlaufende Führungsstangen (10) aufweist, auf denen das Sägeaggregat (4) mit entsprechenden Führungshülsen (12) o.dgl. läuft.

10. Kappsäge nach einem der Ansprüche 1 bis 9, **dadurch gekennzeichnet,**
**daß** das Sägeaggregat (4) in Richtung seiner oberen Endstellung vorgespannt, insbesondere federbelastet ist.

## Claims

1. Transportable chop saw, particularly for machining wood and plastic, having a base plate (1) which forms a workpiece support surface (2); having a sawing unit (4) with a circular saw blade (6), which sawing unit (4) is mounted on the base plate (1) and can be moved downwards towards the workpiece support surface (2) from above and, conversely,
away from said workpiece support surface (2); and
having a stop (9) which is arranged on the base plate (1) in a specific location relative to the sawing unit (4), and against which a workpiece (3) arranged on the workpiece support surface (2) rests during the sawing operation;
wherein the sawing unit (4) is attached in a displaceable manner to a guide (10) which extends substantially perpendicularly to the workpiece support surface (2);
wherein, assuming a complete saw cut is carried out, the size of the workpiece (3) in a direction perpendicular to the workpiece support surface (2) cannot exceed a first maximum value (H) and, in a direction parallel to said workpiece support surface (2), cannot exceed a second maximum value (T);
and wherein the first maximum value (H) for the workpiece (3) is greater than the second maximum value (T) for said workpiece (3), **characterised in that**
the base plate (1) is made up of two parts, that is to say has a stationary carrier or carrying table (14) and a turntable (15) which is attached thereto in a manner rotatable about a vertical axis of rotation (15'), the workpiece support surface (2) being formed by the turntable (15), optionally with adjoining sections of the carrying table (14); and
that the guide (10) is attached to the turntable (15) and the stop (9) is attached to the stationary carrier or carrying table (14).

2. Chop saw according to Claim 1, **characterised in that** the guide (10) is attached to a cantilever arm (13) which is attached to the base plate (1) on the opposite side of the stop (9) from the side on which the workpiece (3) is located, and from that point said cantilever arm (13) is directed forwards in a curved manner into the region in front of said stop (9).

3. Chop saw according to Claim 2, **characterised in that** the cantilever arm (13) with the guide (10) is attached to the turntable (15) by means of an inclination-tilting mounting (16) and that said cantilever arm (13) can preferably be inclined out of the vertical, preferably up to 45°, towards only one side by means of said inclination-tilting mounting (16).

4. Chop saw according to one of Claims 1 to 3, **characterised in that** the stop (9) has a sawing slot (18), which preferably passes right through it, in alignment with the circular saw blade (6).

5. Chop saw according to Claims 3 and 4, **characterised in that** the sawing slot (18) is bordered, towards the side of inclination, by a bevel (19) on the stop (9) which extends upwards and outwards and preferably extends at an angle of 45°.

6. Chop saw according to one of Claims 1 to 5, **characterised in that** the height of the stop (9) is approximately equal to the first maximum value (H).

7. Chop saw according to one of Claims 1 to 6, **characterised in that** the stop (9) can be detached from the base plate (1).

8. Chop saw according to one of Claims 1 to 7, **characterised in that** the depth of the basal area of the chop saw amounts to 1.5 times to 3.0 times the diameter of the circular saw blade (6).

9. Chop saw according to one of Claims 1 to 8, **characterised in that** the guide (10) has at least one, preferably two, guide bars (10) which extend substantially perpendicularly to the workpiece support surface (2) and on which the sawing unit (4) runs with the aid of suitable guide bushes (12) or the like.

10. Chop saw according to one of Claims 1 to 9, **characterised in that** the sawing unit (4) is pre-tensioned, in particular spring-loaded, in the direction of its upper end position.

## Revendications

1. Scie à onglet, en particulier pour le travail du bois et de la matière synthétique,
comportant une plaque de base (1) constituant une surface de dépôt de pièce (2) avec un agrégat de sciage (4) mobile vers ou à l'opposé de la surface de dépôt de pièce (2), monté sur la plaque de base (1) et comportant une lame de scie (6), et
comportant une butée d'appui (9) disposée dans une position relative déterminée par rapport à l'agrégat de sciage (4), montée sur la plaque de base (1), en appui contre une pièce de travail (3) posée sur la surface de dépôt de pièce (2), lors du sciage,
dans lequel l'agrégat de sciage (4) est déplaçable en coulissement dans une coulisse de guidage (10) selon une direction sensiblement perpendiculaire par rapport à la surface de dépôt de pièce (2),
dans lequel une fente de coupe complet prolonge la dimension de la pièce de travail (3), dans une direction perpendiculaire par rapport à la surface de dépôt de pièce (2) sans dépasser une première valeur maximale (H), et dans une direction parallèle à la surface de dépôt de pièce (2), une seconde valeur maximale (T), et dans lequel, la première valeur maximale (H), pour la pièce de travail (3) est plus grande que la seconde valeur maximale (T) pour la pièce de travail (3)
**caractérisée en ce que**,
la plaque de base (1) est construite en deux parties, plus précisément un support fixe ou table de support (14) et une table pivotante (15), articulée sur un axe de pivotement (15') vertical fixé à la table de support, dans lequel la surface de dépôt de pièce (2), est constituée de la table pivotante (15), notamment par des segments voisins de la table de support (14), et
**en ce que** la coulisse de guidage (10) est fixée à la table pivotante (15) et que la butée d'appui (9) est fixée au support fixe ou table de support (14).

2. Scie à onglet selon la revendication 1, **caractérisée en ce que**,
la coulisse de guidage (10) est fixée à un bras coudé (13) qui est monté sur la plaque de base (1) sur le côté de la pièce de travail (3) éloignée de la butée d'appui (9) et qui s'étend sous une forme courbe depuis cet endroit dans la zone située à l'avant de la butée d'appui (9).

3. Scie à onglet selon la revendication 2, **caractérisée en ce que** le bras coudé (13) est monté avec la coulisse de guidage (10) sur la table pivotante (15) au moyen d'une articulation de réglage de l'inclinaison (16), le bras coudé (13) étant de préférence mobile au moyen de l'articulation de réglage de l'inclinaison (16) de manière à être déplacé de préférence de sa position verticale, uniquement d'un côté, à 45°.

4. Scie à onglet selon l'une des revendications 1 à 3, **caractérisée en ce que**
la butée d'appui (9) comporte dans la ligne de fuite de la lame de scie (6) une fente de coupe (18) de préférence traversante.

5. Scie à onglet selon les revendications 3 et 4, **caractérisée en ce que** la fente de coupe (18) est limitée par un biais protubérant (19) de préférence disposé à 45°, orienté vers le haut et vers l'extérieur, solidaire de la butée d'appui (9).

6. Scie à onglet selon l'une des revendications 1 à 5, **caractérisée en ce que**
la hauteur de la butée d'appui (9) est sensiblement égale à la première valeur maximale (H).

7. Scie à onglet selon l'une des revendications 1 à 6, **caractérisée en ce que**
la butée d'appui (9) est amovible par rapport à la plaque de base (1).

8. Scie à onglet selon l'une des revendications 1 à 7, **caractérisée en ce que**
la profondeur de la plaque de base de la scie à onglet est comprise entre 1,5 fois et 3,0 fois le diamètre de la lame de scie (6).

9. Scie à onglet selon l'une des revendications 1 à 8, **caractérisée en ce que**
la coulisse de guidage (10) comporte au moins une et de préférence deux tringles de guidage (10), sensiblement perpendiculaires à la surface de dépôt de pièce (2), sur lesquelles l'agrégat de sciage (4) coulisse au moyen de douilles de glissement (12) ou similaires.

10. Scie à onglet selon l'une des revendications 1 à 9, **caractérisée en ce que**
l'agrégat de sciage (4) est sollicité par précontrainte en direction de sa position terminale supérieure, en particulier au moyen de ressorts.
